# EUROPEAN PATENT APPLICATION

(11) **EP 2 632 060 A1**
(43) Date of publication of application: **28.08.2013**
(21) Application number: 12001234.9
(22) Date of filing: 24.02.2012
(51) Int. Cl.: H04B 7/185

(54) **Cellular system on-board of a vehicle**

(71) Applicant: Airbus Operations GmbH, 21129 Hamburg (DE); The University Court Of The University Of Edinburg, Edinburgh EH9 3JZ (GB)
(72) Inventor: Haas, Harald, Edinburgh EH10 5RE (GB); Bassow, Erhard, 21129 Hamburg (DE)
(74) Representative: Frenkel, Matthias Alexander

(57) **Abstract**

The present invention relates to an onboard base station unit (100, 300) for providing wireless communication services on board of a means of transport, in particular an aircraft. The onboard base station unit (100, 300) comprises: an onboard control unit (140, 340) for acquiring network information from an information signal provided by one or more terrestrial base stations (380a to 380d), in particular an information signal transmitted over a respective broadcast channel of the one or more terrestrial base stations (380a to 380d), to one or more terrestrial mobile stations, wherein the network information enables the one or more terrestrial mobile stations to connect to the one or more terrestrial base stations (380a to 380d); and an onboard communication unit (160, 360a to 360d) for transmitting the acquired network information to one or more onboard mobile stations (400) located on the means of transport for enabling the one or more onboard mobile stations (400) to connect to the onboard base station unit (100, 300) by means of the network information.

## Description

The present invention relates to an onboard base station unit for providing wireless communication services on board of a means of transport, in particular an aircraft, to a method for providing wireless communication services on board of a means of transport, in particular an aircraft, as well as to a computer program for performing the method.

In recent times, mobile communication systems have been conceived which provide mobile communication services (often also referred to as "mobile services") like mobile telephone services or mobile data services on a means of transport like aircrafts, ships (e.g. cruise liners), trains or busses. Passengers, cabin crew and others like maintenance personal can connect to these systems with their mobile devices (also often named mobile terminals or mobile stations) like mobile phones, smartphones, Personal Digital Assistants (PDAs), laptops or tablet computers in order to make phone calls or use data services on board of the means of transport.

When applying such systems to aircrafts, passengers, cabin crew and others can make calls by means of ordinary mobile devices. Presently these mobile communication systems often operate under the so called Global System for Mobile Communications (GSM) Standard. An example for such a system is the so called GSM on Aircraft (GSMoA) System (also sometimes named GSM on Board (GSMoB) System) which has been standardized by the European Telecommunications Standards Institute (ETSI). For this concept, an onboard GSM base station (also named onboard Base Transceiver Station (onboard BTS)) is provided, which is connected to terrestrial networks by means of a satellite link. From the perspective of the terrestrial networks, the Onboard BTS is a separate mobile base station, which is not included in the Public Land Mobile Network (PLNM) architecture. This onboard BTS supplies the onboard cell (also often called microcell, picocell or femtocell due to its small size) and therefore the passengers' mobile devices with data from the terrestrial GSM networks.

Today's GSMoA und GSMoB Systems provide GSM/GPRS (GPRS: General Packet Radio Service) services to the passengers and the cabin crew in the GSM1800 und GSM1900 frequency bands, for example. GSM1800 usually provides a frequency band from 1710 MHz to 1785 MHz in the uplink, i.e. for data transmissions from the mobile terminals to the onboard BTS, and a frequency band from 1805 MHz to 1880 MHz in the downlink, i.e. for data transmissions from the onboard BTS to the mobile terminals. These services are activated in the so called cruise flight phase usually starting at 3000 meters above ground.

In order to ensure that the mobile terminals carried onboard (herein referred to as onboard mobile terminals or onboard mobile stations), for example by passengers or the crew of the aircraft, only connect to the onboard base station (onboard BTS), rather than with terrestrial base stations provided on the ground, a connection between the onboard mobile terminals and the terrestrial base stations is prevented. For this purpose, a so called Network Control Unit (NCU) (often also referred to as ground network suppressor or simply "Jammer") is provided on board of the aircraft which generates and sends out a masking signal (also sometimes called screening signal) for masking terrestrial communication signals sent out by terrestrial base stations. That is, the suppressor ensures that the onboard mobile devices are not able to detect signals from the ground cellular network. In other words, the terrestrial base stations are "invisible" to the mobile terminals due to the masking of the frequency bands used by the terrestrial base stations.

In other words, the main purpose of the suppressor is to avoid that mobile devices in the aircraft cabin try to connect to a terrestrial cellular network on the ground. Especially the mobile devices close to the windows can receive signals from the ground due to the line-of-sight conditions. These mobiles would try to connect to the ground network using full power to overcome the relative high path loss. In addition, due to the high speed of the aircraft, very frequent cell roaming and handovers would occur on the ground network.

The ground network suppressor or "Jammer" is activated at 3000m at the latest. In accordance therewith, flight passengers currently have to deactivate their mobile devices during take-off and landing, as the Jammer is not activated. The onboard cellular base station is activated at flight heights higher than 3000m above ground. The same mobile services as on the ground can then be provided. For data transmission onboard of the aircraft, the onboard BTS and the onboard mobile terminals have to transmit the respective signals with a level which is sufficiently higher than that of the masking signal. In this way, on the one hand, wireless data transmission between the onboard BTS and the mobile terminals located onboard of the aircraft is ensured and, on the other hand, it is prevented that the onboard mobile terminals communicate with terrestrial base stations.

The onboard cellular network is operated by a specific operator with its own mobile operator code. Once the aircraft-specific network is activated, wireless services are provided through this operator which typically has roaming agreements with other operators. If the aircraft descends below 3000m, all mobile devices have to be switched off again. Thereafter, the suppressor will be also switched off.

The suppressor is a relatively expensive device. It also adds to the weight and thus increases the energy consumption of the means of transport without providing any additional services (despite ensuring that mobile services can be safely used on the means of transport). The suppressor further has to be updated regularly to be able to reflect any new developments of the cellular standards that change very frequently (often on annual basis). These updates and redesigns generally affect the entire fleet and are, therefore, very costly - also because of the prolonged out-of-services hours of the aircraft.

It is an object of the present invention to provide a more efficient technique for providing mobile services on board of a means of transport, in particular an aircraft.

This object is solved by the onboard base station unit of claim 1, the corresponding method of claim 9 and the computer program of claim 14. Preferred embodiments are defined by the dependent claims.

According to a first aspect of the present invention, an onboard base station for providing wireless communication services on board of a means of transport, in particular an aircraft, is provided. The onboard base station unit comprises: an onboard control unit for acquiring network information from an information signal provided by one or more terrestrial base stations, wherein the network information enables the one or more terrestrial mobile stations to connect to the one or more terrestrial base stations; and an onboard communication unit for transmitting the acquired network information to one or more onboard mobile stations located on the means of transport for enabling the one or more onboard mobile stations to connect to the onboard base station unit by means of the network information. In this way, the one or more onboard mobile stations may connect to and may be connected to the one or more terrestrial base stations through the onboard base station unit, e.g. the one or more mobile stations may be connected to one or more cellular networks on the ground through the onboard base station unit operating as an onboard relaying unit.

The transmission of the acquired network information by the onboard base station unit (more precisely, by the onboard communication unit) may also be construed such that the onboard base station unit (more precisely, the onboard communication unit) is adapted to forward the acquired network information to the one or more onboard mobile stations. In other words, the onboard base station unit may forward exactly the same network information, which has been previously acquired from the one or more terrestrial base stations, to the one or more onboard mobile stations.

The onboard mobile stations may be any ordinary mobile terminals such as mobile phones, smartphones, Personal Digital Assistants (PDAs), laptops or tablet computers which are able to communicate in a wireless communication environment. In this sense, there is no structural difference between the terrestrial mobile stations and the onboard mobile stations referred to above. The only difference is that the terrestrial mobile stations are located on the ground so that they are able to connect to an ordinary network like an ordinary Public Land Mobile Network (PLMN), while the onboard mobile stations are located on board of the means of transport like on board of an aircraft. Similarly, the mobile communication services (or wireless communication services) may be any kind of mobile or wireless service like mobile telephone services, mobile data services and the like.

The onboard base station unit is located or arranged on the means of transport, e.g. an aircraft, a bus, a ship (e.g., a cruise liner), a train or the like. The onboard base station unit may be adapted to support any of the ordinary mobile communication services used in terrestrial communication networks. In this way, the onboard base station unit may support at least one of the Global System for Mobile Communication, "GSM", Universal Mobile Telecommunication System, "UMTS", High-Speed Downlink Packet Access (HSDPA), Long Term Evolution, "LTE", LTE-Advanced, "LTE-A", Code Division Multiple Access 2000, "CDMA2000", and Worldwide Interoperability for Microwave Access (WiMAX) Standard, to only name a few.

According to a first variant, the onboard base station unit may support only one mobile communication standard, e.g. only GSM. If only the GSM standard is supported, the onboard base station unit may be referred to as an onboard BTS. As another example, the onboard base station unit may only support LTE and may then be referred to as an onboard eNodeB. In case the onboard base station unit only supports one mobile communication standard, more than one, e.g. multiple, onboard base station units may be provided on the means of transport, each of which supporting a different mobile communication standard. For example, for each communication standard which should be supported on board of the means of transport, a different onboard base station unit according to the first variant may be provided onboard.

According to a second variant, the onboard base station unit itself may comprise more than one, e.g. a plurality of, onboard base stations. Each of these onboard base stations contained in the onboard base station unit according to the second variant, may support a different mobile communication standard. For example, a first onboard base station contained in the onboard base station unit supports the GSM standard, while a second onboard base station contained in the onboard base station unit supports the LTE standard and so on.

According to a third variant, the onboard base station unit may itself support two or more, e.g. a plurality of, different mobile communication standards. In this context, the onboard base station unit according to the third variant can be regarded as a hybrid base station, wherein this hybrid base station supports more than one, e.g. a plurality of, mobile communication standards available in terrestrial networks. In order to support multiple mobile communication standards, the onboard base station unit may be adapted to multiplex the different frequency bands used in the different mobile communication standards on a frequency band used for the onboard data transmission and reception by the onboard base station unit. For example, the onboard base station unit may be adapted to support the frequency bands of the mobile communication standards to be supported on board of the means of transport on the LTE or LTE-A frequency band, e.g. the onboard base station unit may be adapted to multiplex the frequency bands to be supported on the LTE or LTE-A frequency band(s).

Similar to the onboard base station unit according to the third variant, the onboard base station unit according to a fourth variant may itself support two or more, e.g. a plurality of, different mobile communication standards. In this context, the onboard base station unit according to the fourth variant can also be regarded as a hybrid base station, wherein this hybrid base station supports more than one, e.g. a plurality of, mobile communication standards available in terrestrial networks. In order to support multiple mobile communication standards, the onboard base station unit may be adapted to support the same frequency bands, as used on ground by the terrestrial base stations and the terrestrial mobile stations for the different mobile communication standards, for onboard data transmission and reception. For example, the onboard base station unit may be adapted to use the same frequency bands for the onboard communication as used on the ground, e.g. the onboard base station may use the GSM frequency band(s) as used in the terrestrial networks and/or the LTE frequency band(s) as used in the terrestrial networks and/or the LTE-A frequency band(s) as used on the ground and so on.

In mobile communication systems, e.g. in GSM, UMTS, LTE or the like, a terminal (mobile station) must perform certain steps before it can receive or transmit data. These steps can be categorized in cell search and cell selection, derivation of system information (network information), and random access. The complete procedure is known in the LTE standard as LTE Initial Access. After the initial access procedure, the terminal is able to receive and transmit its user data. The foregoing is useful to understand the principles of the present invention as described herein.

The network information (also often referred to as System Information (SI)) may comprise or may be information which can be used by the one or more terrestrial mobile stations to connect or access the terrestrial base station which has sent out said network information. The network information may also comprise or be information which is necessary for the one or more terrestrial mobile stations to connect to the one or more terrestrial base stations. The network information (system information) may inform the mobile stations (mobile devices) about all important parameters of how to access the network and/or how to find neighboring cells. In other words, the network information may comprise any relevant or essential information of the terrestrial base stations or terrestrial networks such as the operator code and/or the cell identifier and/or information regarding support of certain standards (e.g. if High Speed Circuit Switched Data (HSCSD), General Packet Radio Service (GPRS), Enhanced Data Rates for GSM Evolution (EDGE) are supported or not) or similar parameters which enable the one or more terrestrial mobile stations to connect to or get access to the one or more terrestrial base stations. The respective information signal may be transmitted over a broadcast channel of the one or more terrestrial base stations to one or more terrestrial mobile stations contained in the coverage area of the respective terrestrial base station.

A first terrestrial base station may transmit a first information signal having first network information to one or more (e.g., a plurality of) first terrestrial mobile stations contained in the coverage area, e.g. the cell, of the first terrestrial base station on the broadcast channel. Further, a second terrestrial base station may transmit a second information signal having second network information different from the first network information to one or more (e.g., a plurality of) second terrestrial mobile stations contained in the coverage area, e.g. the cell, of the second terrestrial base station on the broadcast channel and so on. The first network information may be used by the one or more first terrestrial mobile stations to connect to the first terrestrial base station and the second network information may be used by the one or more second terrestrial mobile stations to connect to the second terrestrial base station and so on. The broadcast channel may be a Broadcast CHannel (BCH).

The onboard base station unit (more precisely, the onboard control unit) may then be adapted to acquire the first network information from the first information signal and/or the second network information from the second information signal. In accordance therewith, the onboard base station unit (more precisely, the onboard communication unit) may be adapted to transmit (or forward) the acquired first network information and/or the acquired second network information to the one or more onboard mobile stations. The one or more onboard mobile stations may receive the first network information and/or the second network information and may connect to or access the onboard base station unit by means of the first network information and/or the second network information. In this way, the one or more onboard mobile stations can connect to the onboard base station by using the same network information (e.g., the first and/or second network information) as used for connecting to (a) terrestrial base station(s) (e.g., the first terrestrial base station and/or the second terrestrial base station). In other words, the one or more onboard mobile stations do not perceive any difference whether they are onboard and connect to the onboard base station by using the network information or whether they are on the ground and connect to the terrestrial base station(s) by using the network information. That is, the onboard base station unit does not have to be operated by a specific operator with its own mobile operator code, but provides the same network information as used on the ground. Thus, from the perspective of mobile stations there is no difference between whether they are currently located on ground or on board of the means of transport.

According to a possible realization of the first aspect, the onboard base station unit may further comprise an external communication unit (which may also be referred to an external communication and relaying unit) for camping on (often also named "camping-on" or sometimes also called "camping to") the one or more terrestrial base stations to receive the information signal containing the network information. The term "camp on" may also be referred to as linked to or reporting to or assigned to. In other words, the external communication unit may be adapted to link to or assign to the one or more terrestrial base stations to receive the information signal containing the network information. In this context, the term "camp on" ("camp-on" or "camp to") may be construed such that the external communication unit detects the signals sent out by a specific base station it is camped on (camped-on or camped to). By camping on the one or more terrestrial base stations, the external communication unit may be able to receive the information signal, although there is a long distance, e.g. several thousand meters distance like 5000m, 7000m or 10000m distance, between the onboard base station unit and the one or more terrestrial base stations it is camped on.

The external communication unit (which may also be referred to as an "external communication and relaying unit", e.g. comprising an external communication unit and a relaying unit, or simply as "relaying unit") may, for example, comprise an antenna array or a beamforming antenna for generating one or more adaptive antenna beams respectively having a dynamically changeable beam pattern for camping on (camping to) the one or more terrestrial base stations. In other words, the antenna array or the beamforming antenna may be adapted to generate one or more adaptive antenna beams respectively having a dynamically changeable beam pattern for detection of and connection to the one or more terrestrial base stations. The antenna array may be adapted to generate multiple adaptive antenna beams each of which having a dynamically changeable beam pattern. It is conceivable that the antenna array generates a first adaptive antenna beam for camping-on to (for detecting and linking to) a first terrestrial base station in order to receive the first information signal (having the first network information) and generates a second adaptive antenna beam for camping-on to (for detecting and linking to) a second terrestrial base station in order to receive the second information signal (having the second network information) and so on. Said first and second antenna beams may be generated to have the same or different beam patterns and may subsequently be changed to have the same or different beam patterns.

The external communication unit may, at least partially, be arranged outside of the means of transport. For example, at least the beamforming antenna or antenna array may be arranged at the outside of the means of transport, e.g. the aircraft.

As described above, the onboard base station unit according to the fourth variant uses the same frequency bands for communication between onboard mobile stations and the onboard base station unit as used on ground for communication between terrestrial mobile stations and terrestrial base stations. The onboard base station unit according to the fourth variant comprising the external communication unit, which itself may comprise the beamforming antenna, and the onboard control unit may simply act as a "Tunnel", i.e., exactly the same frequencies may be used inside the cabin and a single control unit (the onboard control unit) may be able to support all terrestrial systems on the ground and all the frequencies used on the ground. For enabling the foregoing, software defined radios in addition to carrier aggregation may be used. However, the use of software defined radios is not limited to the onboard base station unit according to the fourth variant, but may be used for all implementation aspects of the onboard base station unit described herein.

The beamforming antenna at the means of transport, in particular the aircraft, benefits from the multipath propagation on the ground. In addition to this, the beamforming antenna or beamforming antenna array may have a high antenna gain which helps overcome the issue of antenna downtilts of transmittal base stations. In addition or alternatively, the beamforming antenna or antenna array may be operated as a Multiple-Input-Multiple-Output (MIMO) spatial multiplexing system for onboard-to-ground communication, e.g. aircraft-to-ground communication. Moreover, an adaptive algorithm may be devised to switch between the beamforming operation and the MIMO spatial multiplexing operation. In consequence, the external communication unit may be capable of maintaining a connection to a terrestrial base station by using the generated adjustable antenna beam or of maintaining a parallel connection to multiple terrestrial base stations by using multiple generated adjustable antenna beams in order to simultaneously acquire the respective network information from the terrestrial base stations.

According to a first possible configuration of the possible realization, the external communication unit (which, in case of an aircraft may be called external aircraft communication unit), in particular the antenna array of the external communication unit, may be further adapted to detect the one or more terrestrial base stations by using a first antenna beamwidth and to camp-on to (link to or assign to) the one or more detected terrestrial base stations for receiving the information signal by using a second antenna beamwidth, wherein the second antenna beamwidth is smaller than the first antenna beamwidth. For example, the onboard control unit may control the antenna array to perform the following scanning process to search for and detect terrestrial base stations and to maintain the radio link to the detected terrestrial base stations.

At first, the antenna array may generate one or more antenna beams each of which having a first (relatively large) beamwidth and thus having a first (relatively little) antenna gain. The antenna array can scan the ground for terrestrial base stations /terrestrial networks by means of the one or more antenna beams. When the antenna array has detected (found) one or more terrestrial base stations it can be controlled by the onboard control unit to narrow the beamwidth of one or more of the antenna beams, thereby increasing the antenna gain of the antenna beam(s) having the narrower beamwidth. In this way, the antenna array can be controlled to narrow the beamwidth of one or more antenna beams once a terrestrial base station is detected and can maintain the connection to the detected terrestrial base station by means of the antenna beam having the second (relatively narrow) beamwidth. Using the antenna beam with the second beamwidth (having the relatively high antenna gain), the external communication unit can receive relatively strong signals from the detected terrestrial base station on the ground-to-onboard link from the terrestrial base station to the means of transport (in case of an aircraft the link can be called ground-to-aircraft link) and, in turn, can produce strong signals at the terrestrial base station on the onboard-to-ground link between the means of transport and ground (in case of an aircraft this link can be called aircraft-to-ground link). Simultaneously, one or more other antenna beams may maintain the first beamwidth in order to search for further terrestrial base stations and can camp-on and maintain the radio frequency (RF) link to further terrestrial base stations by using the second beamwidth in order receive the network information from the further terrestrial base stations.

According to a second possible configuration of the possible realization which may /may not be combined with the first possible configuration, the onboard control unit may be further adapted to derive, from the strength of a signal received by the external communication unit from the one or more terrestrial base stations, one or more terrestrial received signal strength indicators. The received signal may be the information signal or any other signal. Each of said one or more terrestrial received signal strength indicators indicates the strength of the signal from the one or more terrestrial base stations to the one or more onboard mobile stations. In other words, the received signal strength indicators may be regarded as an indication of the power level of the signals being received by the antennas of the respective onboard mobile stations. These received signal strength indicators may be estimated by the onboard base station unit. The onboard control unit may, by considering the strength of the signal (RF signal) received by the external communication unit, estimate the strength of the same signal (the same RF signal) as perceived or received at the one or more onboard mobile stations.

The external communication unit may receive the signal by means of its beamforming antenna (or antenna array). The beamforming antenna usually has a higher antenna gain than the onboard mobile stations. In consequence, the onboard control unit may, in order to estimate the terrestrial received signal strength indicators, consider that the signal strength of the signal is higher than the signal strength of the same signal at the onboard mobile stations. For example, the onboard base station unit may consider the (assumed) difference in antenna gains between the higher antenna gain of the beamforming antenna and the lower antenna gain of the onboard mobile stations in order to estimate the terrestrial received signal strength indicators. Further, the onboard control unit may consider the path loss of the signal from the terrestrial base stations to the onboard mobile stations and/or the path loss from the onboard base station unit to the onboard mobile stations and/or the loss caused by the cabin skin or aircraft skin and the like.

In accordance with the second possible configuration, the onboard base station unit, e.g. the onboard control unit of the onboard base station unit, may be further adapted to adjust the broadcast transmit power of the onboard communication unit such that an onboard received signal strength indicator (the received signal strength indicator received from the onboard base station unit, e.g. an onboard BTS/ eNodeB) received by the onboard mobile stations from the onboard base station unit is, e.g. always, higher than the terrestrial received signal strength indicators received by the onboard mobile stations from any terrestrial base station. For example, the onboard base station unit may apply a margin in addition. Further, the onboard base station unit, e.g. the onboard eNodeB, may ensure that the received signal strength indicator from it, received at the ground, is sufficiently low in order to avoid that any of the terrestrial mobile stations would attempt to link to the onboard base station unit. In this way all onboard mobile stations attempt to link to the onboard base station unit, e.g. the onboard BTS/ eNodeB, rather than to the terrestrial base stations. In other words, the higher onboard received signal strength indicator "tells" the one or more onboard mobile stations that the onboard base station unit is "better" than the one or more terrestrial base stations, i.e. that the connection between the onboard base station unit and the one or more onboard mobile stations is better than the connection between the one or more terrestrial base stations and the one or more onboard mobile stations.

The onboard base station unit according to the second possible configuration in this way ensures in an efficient manner that the received signal strength indicator at all mobile stations in the cabin (i.e., the onboard received signal strength indicator) is higher than the received signal strength indicator from any of the terrestrial base stations (i.e, the terrestrial received signal strength indicators) and thus ensures that the onboard mobile stations will always connect to the onboard base station unit (as the onboard received signal strength indicator is always higher than the terrestrial received signal strength indicators) rather than to the one or more terrestrial base stations. Fur this purpose, the external communication unit may determine the best case path gain to the ground since none of the onboard mobile stations would have the same antenna gain as the onboard base station unit. The onboard base station unit, e.g. the onboard eNodeB, may also determine the path gain to any of the onboard mobile stations.

The received signal strength indicators mentioned above, e.g. the terrestrial received signal strength indicators and the onboard received signal strength indicator, may be

Received Signal Strength Indicators (RSSI) in the sense of UMTS and GSM terminology and/or may be Reference Signal Received Power (RSRP) in the sense of LTE terminology. For example, dependent on which standards are currently supported by the onboard base station unit, RSSIs and/or RSRPs or the like may be supported.

The onboard control unit may further be adapted to determine whether at least one of the one or more onboard mobile stations is connected to the onboard base station unit and to instruct the external communication unit to connect to at least one of the one or more terrestrial base stations, if at least one of the one or more onboard mobile stations is connected to the onboard base station unit. The onboard control unit may further be adapted to instruct the external communication unit to connect to the one or more terrestrial base stations using a connection procedure which corresponds to the connection procedure used by the one or more onboard mobile stations to connect to the onboard base station unit. Said same connection procedure may comprise that the same network information is used for establishing the connection.

By establishing said connection procedure, a bidirectional communication link between one or more onboard mobile stations and one or more terrestrial base stations is established. In this respect, the onboard base station may be construed as a relay for this bidirectional connection, e.g. the onboard base station unit having the external communication unit may act as a transparent feed-forward relay. The bidirectional link may also be viewed as comprising an onboard communication link (the wireless connection between the onboard base station unit and the one or more onboard mobile stations) and an onboard-to-ground communication link (the wireless connection between the onboard base station unit and the one or more terrestrial base stations). The one or more onboard mobile stations connected to the onboard base station unit do not realize if they are connected directly to the one or more terrestrial base stations or via the onboard base station unit. In other words, the onboard base station unit may be considered to act as a transparent tunnel for the wireless communication links.

Data communication may also be provided by the onboard base station unit. For onboard communication, it is sufficient that the one or more onboard mobile terminals intending to get access to an onboard wireless service, e.g. an onboard wireless data service, are connected to the onboard base station unit. The onboard wireless data service may be provided by the onboard base station unit. Further, inter-cabin communication is possible. For the purpose of communicating with terrestrial mobile stations and/or terrestrial networks, the external communication unit may further be adapted to communicate with the one or more terrestrial base stations using one or more dedicated terrestrial data channels.

According a first possible implementation, the onboard communication unit may be adapted to communicate with the one or more onboard mobile stations using dedicated onboard data channels corresponding to the dedicated terrestrial data channels. In other words, according to the first possible implementation, the onboard base station unit may use the same dedicated data channels for the onboard communication link as for the onboard-to-ground /ground-to-onboard communication links. The frequency bands used for the onboard data communication between the onboard base station unit and the onboard mobile stations may at least partially overlap with or may correspond to the frequency bands used for the onboard-to-ground /ground-to-onboard communication links, respectively. The foregoing is independent of whether Time Division Duplex (TDD) or Frequency Division Duplex (FDD) is used for the onboard-to-ground /ground-to-onboard communication links.

According to a second possible implementation, the onboard communication unit may be adapted to multiplex the dedicated terrestrial data channels and/or control channels on one or more multiplex channels and to communicate with the one or more onboard mobile stations using the one or more multiplex channels. In accordance with the second possible implementation, the onboard base station unit does not use the same dedicated data channels for the onboard communication link as for the onboard-to-ground communication link, but transmits the data on the one or more multiplex channels. The frequency band(s) used for the onboard data communication between the onboard base station unit and the onboard mobile stations may at least partially overlap with the frequency bands used for the onboard-to-ground /ground-to-onboard communication links.

The onboard base station unit may further be adapted to operate as an autonomous femtocell or the like. For example, the onboard base station unit, more precisely the external communication unit, may be adapted to connect to the underlying core network such that the onboard base station unit can operate as an autonomous femtocell. The onboard base station unit may operate as a femtocell, when the respective means of transport, e.g. the aircraft, is in a particular condition, in which the ordinary operation described above is e.g. not activated. In case of an aircraft it is conceivable that the onboard base station unit operates as a femtocell when the aircraft is below a predetermined flight height or on the ground, e.g. before, during or after the boarding procedure, when waiting for the permission to take off, immediately after landing and so on.

For implementing the operation of the onboard base station unit as a femtocell, the onboard base station unit may be operated such that a limited set of users can gain connectivity access to the femtocell. For this purpose, the onboard base station unit may be configured in a closed subscriber group (CSG) mode. When the femtocell is configured in CSG mode, only those users included in the femtocell's access control list may be allowed to use the femtocell resources. For example, the femtocell may be configured such that only some or all of the onboard mobile stations are allowed to get access to the femtocell. The CSG mode additionally ensures that no terrestrial mobile stations and mobile stations on board of another means of transport, e.g. on board of a neighbouring aircraft, can get access to the onboard base station unit.

As indicated above, the onboard base station unit may be adapted to support at least one of the GSM, UMTS, LTE, LTE-A, CDMA2000 and WiMAX Standard. In this way, the onboard base station unit may be adapted to communicate with a terrestrial base transceiver station (BTS) according to the GSM standard, a terrestrial nodeB according to the UMTS standard or a terrestrial eNodeB according to the LTE or LTE-A standard. In the direction from the onboard base station unit to the onboard mobile stations, the onboard base station unit may be adapted to operate as a BTS according to the GSM standard and/or a nodeB according to the UMTS standard and/or an eNodeB according to the LTE or LTE-A standard. The foregoing standards are merely exemplary and further (also future) mobile communication standards may also be supported.

According to a second aspect, a method for providing wireless communication services on board of a means of transport, in particular an aircraft, is provided. The method comprises the steps of: acquiring, by an onboard base station unit located on the means of transport, network information from an information signal provided by one or more terrestrial base stations to one or more terrestrial mobile stations, wherein the network information enables the one or more terrestrial mobile stations to connect to the one or more terrestrial base stations; and transmitting, by the onboard base station unit, the acquired network information to one or more onboard mobile stations located on the means of transport for enabling the one or more onboard mobile stations to connect to the onboard base station unit by means of the network information. In particular, the information signal may be transmitted on a respective broadcast channel of the one or more terrestrial base stations.

The step of acquiring the network information may also be regarded as a step of deriving network information from the information signal.

The method may further comprise the step of camping, by the onboard base station unit, on the one or more terrestrial base stations to receive the information signal containing the network information. In other words, the method may further comprise the step of maintaining, by the onboard base station unit, the RF link to the one or more terrestrial base stations to receive the information signal containing the network information. The method may further comprise the step of generating, by the onboard base station unit, one or more adaptive antenna beams respectively having a dynamically changeable beam pattern for camping-on the one or more terrestrial base stations. The method may further comprise the step of detecting, by the onboard base station unit, terrestrial base stations by using a first antenna beamwidth and camping, by the onboard base station unit, on one or more of the detected terrestrial base stations for receiving the information signal by using a second antenna beamwidth, wherein the second antenna beamwidth is smaller than the first antenna beamwidth.

The method may further comprise the step of deriving, by the onboard base station unit, from the strength of a signal (an RF signal), in particular the information signal, received by the onboard base station unit from the one or more terrestrial base stations, one or more terrestrial received (RF) signal strength indicators. Each of the one or more terrestrial received (RF) signal strength indicators indicate the strength of the (RF) signal, in particular the information signal, transmitted from the one or more terrestrial base stations to the one or more onboard mobile stations. The method may further comprise the step of signaling, by the onboard base station unit, to the one or more onboard mobile stations an onboard received (RF) signal strength indicator indicating a higher (RF) signal strength than the one or more terrestrial received (RF) signal strength indicators.

The method may further comprise the step of determining, by the onboard base station unit, whether at least one of the one or more onboard mobile stations is connected to the onboard base station unit and connecting to at least one of the one or more terrestrial base stations, if at least one of the one or more onboard mobile stations is connected to the onboard base station unit. Alternatively or additionally, the method may further comprise the step of connecting, by the onboard base station unit, to the one or more terrestrial base stations using a connection procedure which corresponds to the connection procedure used by the one or more onboard mobile stations to connect to the onboard base station unit.

The onboard base station unit may be adapted to establish a bidirectional communication link with the terrestrial base station units and/or may be adapted to establish a bidirectional communication link with the onboard mobile stations. For this purpose, the method may further comprise the step of communicating, by the onboard base station unit, with the one or more terrestrial base stations using one or more dedicated terrestrial data channels and the method may further comprise the steps of communicating, by the onboard base station unit, with the one or more onboard mobile stations using dedicated onboard data channels corresponding to the dedicated terrestrial data channels or multiplexing, by the onboard base station unit, the dedicated terrestrial data channels on one or more multiplex channels and communicating, by the onboard base station unit, with the one or more onboard mobile stations using the one or more multiplex channels.

According to a third aspect, a computer program product is provided. The computer program product comprises program code portions for performing one or more of the steps of any one of the method aspects described herein, when the computer program product is run or executed on a computer system or on one or more computing devices (e.g., a microprocessor, a microcontroller or a digital signal processor (DSP)). The computer program product may be stored on a computer-readable recording medium, such as a permanent or rewritable memory. The computer program product may also be provided for reception or download via the onboard communication network and/or one or more other computer networks, such as the Internet, a cellular telecommunication network or a wireless or wired Local Area Network (LAN).

All of the above described aspects may be implemented by hardware circuitry and/or by software. The software implementation may make use of a software-defined radio system (SDR). An SDR is a radio communication system where components that are typically implemented in hardware (e.g. mixers, filters, amplifiers, modulators / demodulators, detectors, etc.) are instead implemented by means of software on a personal computer, general-purpose computer or embedded computing devices. A basic SDR system may comprise or consist of a personal computer equipped with a sound card, or other analog-to-digital converter, preceded by some form of RF front end. Significant amounts of signal processing are handed over to the general-purpose processor, rather than being done in special-purpose hardware. Such a design produces a radio which can receive and transmit widely different radio protocols (sometimes referred to as a waveforms) based solely on the software used.

Even if some of the above aspects have been described herein with respect to an onboard base station unit, these aspects may also be implemented as a method or as a computer program for performing the method. Similarly, aspects described as a or with respect to a method may be realized by means of suitable units in the on board base station unit or by means of the computer program.

In the following, the present invention will further be described with reference to exemplary embodiments illustrated in the figures, in which:
- Figure 1: schematically illustrates a first embodiment of an onboard base station unit;
- Figure 2: illustrates a flow diagram of a method according to a first embodiment performed by the onboard base station unit according to the first embodiment of figure 1;
- Figure 3: schematically illustrates a second embodiment of an onboard base station unit communicating with terrestrial base stations;
- Figure 4: schematically illustrates the provision of wireless services by the onboard base station unit according to the second embodiments of figure 3 communicating with terrestrial base stations; and
- Figure 5: schematically illustrates the received signal strength of a signal received by onboard mobile stations from a terrestrial base station in comparison with the received signal strength of a signal received by the onboard mobile stations from the onboard base station unit of figures 3 and 4.

In the following description, for purposes of explanation and not limitation, specific details are set forth, such as specific network topologies including particular network nodes, communication protocols, communication standards etc., in order to provide a thorough understanding of the present invention. It will be apparent to one skilled in the art that the present invention may be practiced in other embodiments that depart from these specific details. For example, the skilled person will appreciate that the present invention may be practiced with mobile communication standards different from the LTE standard discussed below to illustrate the present invention. For example, the present invention may similarly realized by using, in addition to or alternatively to the described LTE system, GSM and/or UMTS and/or LTE-A and/or CDMA2000 or any other terrestrial cellular system. Also, the present invention may be practiced in any network to which mobile or stationary users may attach. For example, the invention is applicable to, besides cellular networks, Wireless Local Area Networks (WLAN), Worldwide Interoperability for Microwave Access (WiMax), Bluetooth, Digital Video Broadcasting (DVB) or similar wireless networks. While the exemplary embodiments described below are described with respect to aircrafts as an example for a means of transport for which the present invention is applicable, the skilled person will understand that the present invention is also applicable to other means of transports like ships (e.g., cruise liners), busses, trains or the like.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the present invention is described as a method, it may also be embodied in a device (i.e., the onboard base station unit described below), a computer processor and a memory coupled to a processor, wherein the memory is encoded with one or more programs that perform the methods disclosed herein when executed by the processor.

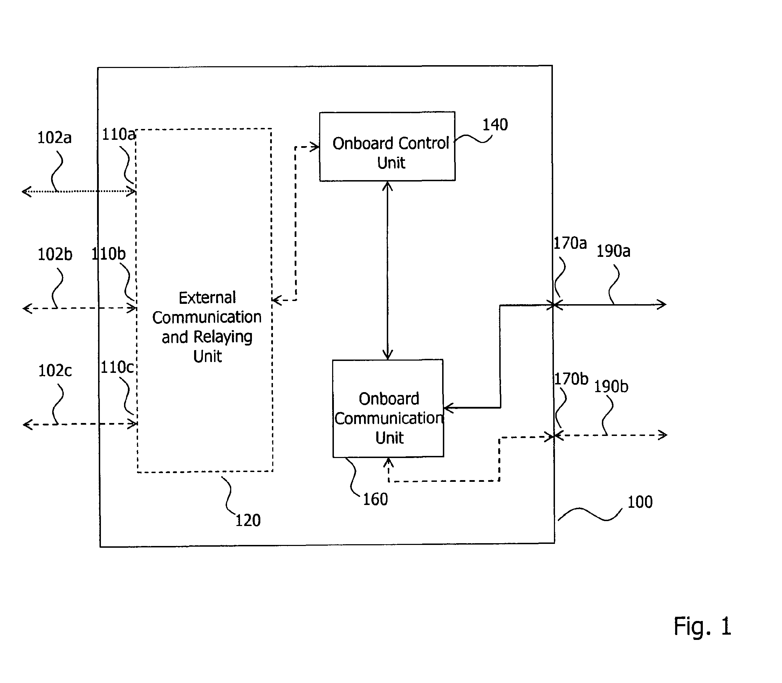

Figure 1 schematically illustrates an onboard base station unit 100 according to a first embodiment.

The onboard base station unit 100 comprises an onboard control unit 140 and an onboard communication unit 160. As illustrated by the dashed lines in figure 1, the onboard base station unit 100 may also comprise an external communication unit 120, which can also be named external communication and relay unit 120 (see figure 1). In the context of aircrafts, the external communication unit 120 may also be named aircraft communication unit or communication unit of the aircraft.

The external communication unit 120 comprises at least one antenna for connecting to and communicating with terrestrial base stations and terrestrial cellular networks. While the at least one antenna is typically arranged outside the aircraft, further elements of the external communication unit 120 may also be arranged outside, but also inside the aircraft. The external communication unit 120 at least comprises a first external antenna 110a for establishing a communication link 102a to ground networks. The communication link 102a is illustrated in figure 1 as a bidirectional communication link (as can be seen from the two arrows), i.e. the external communication unit 120 can connect to a terrestrial base station via the first external antenna 110a such that it can receive signals from the terrestrial base station on an ground-to-aircraft link and can transmit signals to the terrestrial base station on an aircraft-to-ground link. As can be seen from figure 1, the ground-to-aircraft link and the aircraft-to-ground link are exemplarily illustrated as one single first bidirectional link 102a. However, the first bidirectional link 102a may also be separated into two one-directional links. In addition to the first antenna 110a, the external communication unit 120 may further comprise one or more additional antennas 110b, 110c. In figure 1, these two further external antennas 110b, 110c are exemplarily illustrated as being capable of establishing a further bidirectional link 102b, 102c, respectively. In the exemplary configuration of figure 1, the external communication unit 120 comprises three antennas 110a, 110b, 110c for establishing bidirectional communication links 102a, 102b, 102c to ground. However, any plurality of antennas may be provided. Instead of multiple antennas 110a, 110b, 110c, an antenna array may be provided which is adapted to generate multiple antenna beams for establishing the bidirectional links 102a, 102b, 102c in the same way as the multiple antennas 110a, 110b, 110c described above. Thus, the three antennas 110a, 110b, 110c shown in figure 1 can also be regarded as an antenna array for generating three antenna beams.

When the external communication unit 120 is provided, it is connected to the control unit 140 which itself is connected to the onboard communication 160. The onboard control unit 140 is adapted to control the total operation of the onboard base station unit 100 or the operation of some units of the onboard base station unit 100. The onboard communication unit 160 comprises a first onboard antenna 170a for establishing a first bidirectional communication link 190a with one or more, e.g. a plurality of, mobile stations (mobile terminals, e.g. mobile phones, smartphones, laptops, tablet computers or the like). The onboard communication unit 160 may further comprise a second onboard antenna 170b for establishing a second bidirectional communication link 190b with one or more, e.g. a plurality of, mobile stations. The onboard antennas 170a, 170b may support different frequency bands, i.e. may be adapted to transmit/receive signals having different frequency bands. For example, the first onboard antenna 170a may be adapted to transceive signals in a frequency band used according to the LTE standard and the second onboard antenna 170b may be adapted to transceive signals in a frequency band used according to the GSM standard. To give an example, the first onboard antenna 170a may be adapted to receive signals from the onboard mobile stations in an uplink frequency band from 1920 MHz to 1980 MHz (or from 2500 MHz to 2570 MHz) and to transmit signals to the onboard mobile stations in a downlink frequency band from 2110 MHz to 2170 MHz (from 2620 MHz to 2690MHz). Likewise, the second onboard antenna 170b may be adapted to receive signals from the onboard mobile stations in an uplink frequency band from 1710 MHz to 1785 MHz and to transmit signals to the onboard mobile stations in a downlink frequency band from 1805 MHz to 1880 MHz. The number of the two onboard antennas 170a, 170b is merely exemplary such that any number of onboard antennas 170a, 170b may be provided. Instead of the two onboard antennas 170a, 170b shown in figure 1, only one single onboard antenna, namely the onboard antenna 170a may be provided. The single onboard antenna 170a may be adapted to receive and transmit signals in a plurality of different frequency bands or in one single frequency band. Alternatively, the elements 170a, 170b may also be regarded as RF antenna ports of a multi-band antenna.

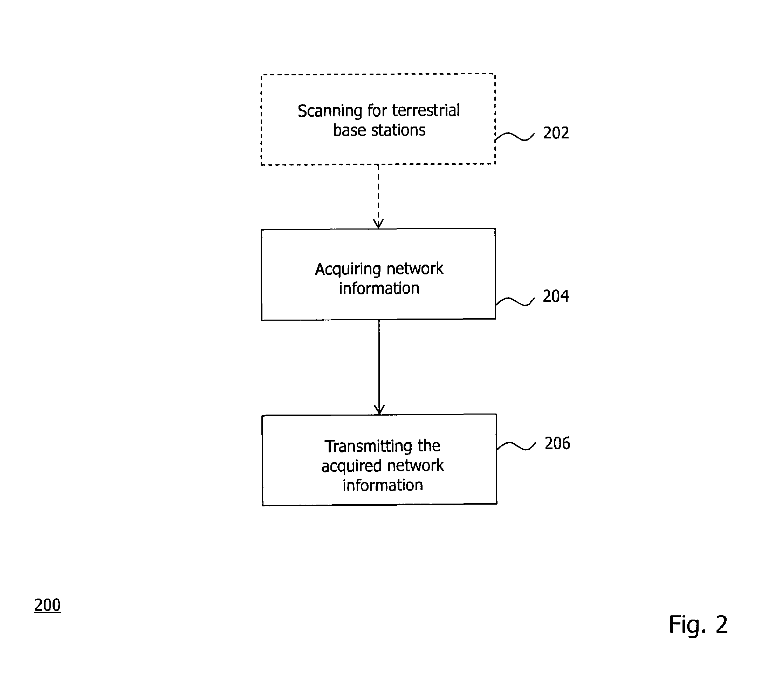

The principles of operation of the onboard base station 100 according to the first embodiment of figure 1 will be further described with respect to figure 2. Figure 2 illustrates a flow diagram of a method according to a first embodiment performed in the onboard base station 100 of figure 1.

The method according to the first embodiment may comprise the step of scanning the ground for terrestrial base stations / terrestrial networks (step 202). If the onboard base station 100 contains the external communication unit 120, step 202 is performed by the external communication 120. For scanning the ground, the external communication unit 120 uses at least the first external antenna 110a to generate at least one antenna beam. The external communication unit 120 may also use more than only the first external antenna110a, e.g. all antennas 110a, 110b, 110c to generate multiple antenna beams each of which having a predetermined beamwidth. The beamwidths of the generated antenna beams may be the same or at least partially different from each other. By means of the one or more antenna beams, the external communication unit 120 searches the ground for the presence of terrestrial base stations / terrestrial cellular networks. If the external communication unit 120 detects one or more terrestrial base stations, it uses the generated one or more antenna beams to read signals from the base stations. In particular, the external communication unit 120 uses one of the antenna beams to assign to one of the detected terrestrial base stations, i.e. the external communication unit 120 connects to each of the detected terrestrial base stations by means of one antenna beam. The beamwidth of the generated antenna beam(s) may be changeable.

After scanning the ground for terrestrial base stations in step 202 and maintaining the RF link to the one or more the detected base stations, the external communication unit 120 is able to detect the signals sent out by the one or more detected base stations to one or terrestrial mobile stations, in particular terrestrial mobile stations located in the coverage area of the terrestrial base station. In particular, the external communication unit 120 "listens" to the signals transmitted by the detected terrestrial base stations over the Broadcast CHannel (BCH). From the signals transmitted over the BCH, the control unit 140 acquires network information contained in the signals (step 204). The network information is usually transmitted by the terrestrial base station to all terrestrial mobile stations within its coverage area, so that the terrestrial mobile stations obtain knowledge about how to access the terrestrial base station (this knowledge is derivable from the network information). By using the generated antenna beam, the onboard base station unit 100 can acquire the network information in the same way an ordinary terrestrial mobile station does. The network information may comprise several types of information which enables the terrestrial mobile stations to connect to the terrestrial base station, e.g. a cell identifier and/or an operator code of the operator of the terrestrial base station on a certain frequency and/or channel and the like.

The control unit 140 controls the onboard communication unit 160 to transmit (or forward) the acquired network information to one or more of the onboard mobile stations carried by the passengers and/or cabin crew on board of the aircraft (step 206). The onboard communication unit 160 may forward the network information to a subset of the onboard mobile stations, e.g. mobile stations in a certain area, or to all onboard mobile stations (which are switched on). The onboard mobile stations receiving the network information are now able to connect to the onboard base station unit 100, in particular to the onboard communication unit 160, by means of the network information. Since the network information on board of the aircraft are the same as those used on the ground, the mobile stations do not have to connect to the onboard base station unit 100 by using onboard specific network information (e.g., the onboard mobile stations do not need an onboard specific operator code of an onboard operator which operates on board rather than on the ground). The onboard mobile stations use the same network information as used on the ground by the terrestrial mobile stations, e.g. they can connect to the same operator as the mobile stations on the ground. The onboard mobile stations can connect to the onboard base station 100 by means of the ordinary ground network information. In this way, wireless communication services are provided efficiently.

To further provide access to terrestrial networks, an aircraft-to-ground connection may be established by the onboard base station unit 100. In this context, the method may further comprise that the onboard control unit 140 instructs the external communication unit 120 to connect to the detected terrestrial base stations by using the respective network information (e.g., to connect to the terrestrial base station which has previously sent out the network information). From the perspective of the terrestrial base station, an ordinary mobile station, in this case the onboard base station unit 100, requests to access the connection. In other words, from the view of the terrestrial base station, there is no difference whether a terrestrial mobile station within the coverage area or the onboard base station unit 100 connects to the terrestrial base station on the aircraft-to-ground link. In this way, a bidirectional connection between the onboard mobile stations and the terrestrial base station is established in which the onboard base station unit 100 may be regarded as a tunnel which forwards the information between the onboard mobile stations and the terrestrial network. In this way, not only onboard communication, but also onboard-to-ground and ground-to-onboard communication is provided.

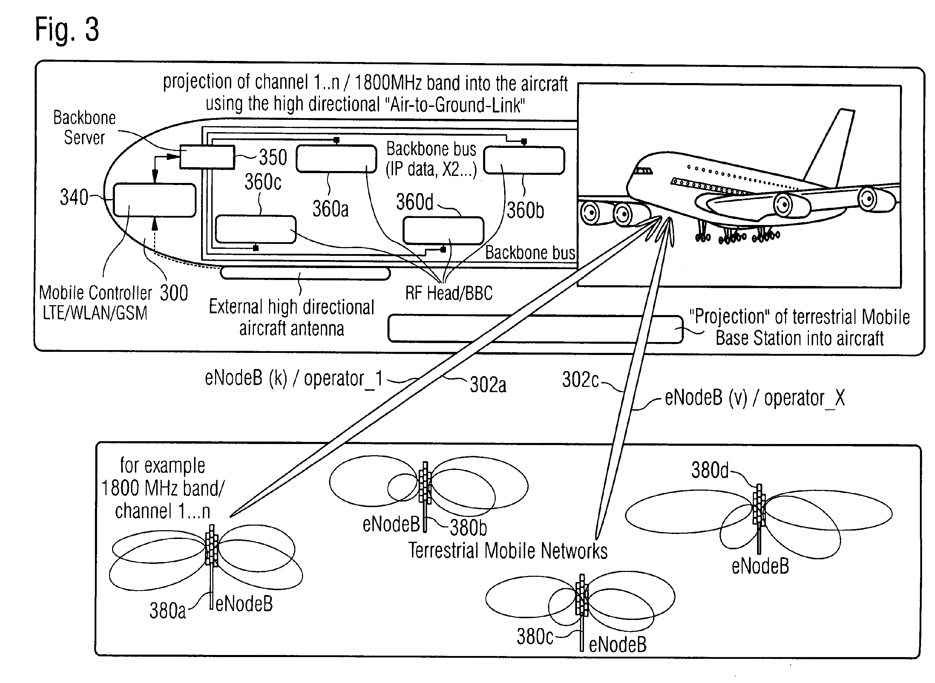

In figure 3, a schematic illustration of an onboard base station unit 300 according to a second embodiment is given. The onboard base station unit 300 of the second embodiment contains some further details, but all of the above described general explanations related to the onboard base station unit 100 of the first embodiment equally apply to the onboard base station unit 300 of the second embodiment. That is, the onboard base station unit 100 can be regarded as the more general concept which is common to both the onboard base station unit 100 and the onboard base station unit 300.

The onboard base station unit 300 comprises an external antenna (system) which is in the following referred to as antenna array 320 for generating multiple adaptive antenna beams or an external high directional aircraft antenna 320 for generating multiple adaptive antenna beams. The onboard base station unit 300 further comprises a mobile controller 340, similar to the onboard control unit 140 as described with respect to figure 1, which is connected to a backbone network. The backbone network comprises a backbone server 350 and multiple baseband controller units 360a to 360d which respectively contain a radio frequency (RF) head. For sake of illustration rather than limitation, four baseband controller units 360a to 360d are shown in figure 3. However, the backbone network may comprise any number of baseband controller units 360a to 360d. The multiple baseband controller units 360a to 360d may be considered similar to the onboard communication unit 160 as described with respect to figure 1. The elements of the backbone network are connected to each other by means of a backbone bus, i.e. a wired connection providing very high bandwidths and data rates.

The aircraft antenna array 320 generates and uses adaptive antenna beams to scan the terrestrial mobile networks. In figure 3, two adaptive antenna beams 302a, 302c are exemplarily illustrated. However, the antenna array 320 may generate and use any number of adaptive antenna beams. Further, four terrestrial base stations 380a to 380d are exemplarily shown in figure 3 to illustrate that the antenna array 320 can scan the ground to find a plurality of terrestrial base stations 380a to 380d. In figure 3, the terrestrial base stations 380a to 380d are exemplarily illustrated as terrestrial LTE base stations, i.e. terrestrial eNodeBs but are not limited thereto.

The adaptive antenna beams can be adapted such that the beamwidth of the beams is changed. In principle, the narrower the beam the higher the antenna gain. A high antenna gain enables the aircraft, more precisely the onboard base station unit 300, to camp to a terrestrial base station 380a to 380d for a longer period. This reduces the signalling overhead due to cell handovers on the ground. In other words, the onboard base station unit 300 can maintain the connection to the terrestrial base stations 380a to 380d the longer the narrower the beamwidths of the antenna beams 302a, 302c for connecting to the terrestrial base stations 380a to 380d are. In addition, the adaptive antenna beams 302a, 302c ensure that a complete and exhaustive image of the terrestrial cellular mobile phone system can be created onboard. The entire area that is "visible" by the beamforming antenna array 320 (that is detectable by the onboard base station unit 300) is significantly larger than the area that a mobile phone in the aircraft can "see" (that an onboard mobile station can detect). This completely avoids the situation that an onboard mobile station finds and tries to connect to a terrestrial base station 380a to 380d which is "overseen" by the antenna system 320.

A fast procedure for searching for terrestrial base stations 380a to 380d can be provided as follows. In order to speed up the terrestrial base station search process, an adaptive algorithm can be devised by which the beamwidth is successively narrowed. This algorithm starts with large coverage (large beamwidth) on the ground to find a terrestrial base station 380a to 380d, but at the expense of only small antenna gains, and once a terrestrial base station 380a to 380d is detected, the antenna beamwidth of the antenna beam 302a, 302c which is used to connect to the found terrestrial base station is decreased and the antenna gain is thereby increased. By decreasing the beamwidth and thereby increasing the antenna gain, the external high directional antenna 320 is able to receive strong signals from the terrestrial base station 380a to 380d (on ground-to-aircraft link) and, in turn is able to produce strong signals at the terrestrial base station 380a to 380d on the link between aircraft-to-ground.

The onboard base station unit 300 is then able to read the broadcast channel of the terrestrial system (more precisely the terrestrial base stations 380a to 380d it is connected to with a sufficiently high antenna gain) which contains all relevant network information such as cell identifier, operator code etc. The cellular system inside the aircraft cabin uses the network information to mirror/project the terrestrial system inside the aircraft cabin in a transparent fashion.

Referring to figure 3 more specifically, four eNodeBs 380a to 380d (four terrestrial LTE base stations) are shown to illustrate that a plurality of eNodeBs and possibly other terrestrial base stations operating under a different standard are located on the ground. The aircraft having the onboard base station unit 300 flies over this area and scans this area by means of a plurality of antenna beams generated by the antenna array 320 (by means of example, two antenna beams 302a, 302c are shown). In order to search and find at least some of the eNodeBs 380a to 380d, the generated antenna beams 302a, 302c have a relatively large beamwidth. In this way, the antenna array 320 can scan a wide area. As schematically illustrated in figure 3, the antenna array 320 finds the two eNodeBs 380a, 380c by means of the antenna beams 302a, 302c. Once it has found the eNodeBs 380a, 380c, the control unit 340 instructs the antenna array 320 to narrow the beamwidth of the antenna beams 302a, 302c and to thereby increase antenna gains of the antenna beams 302a, 302c to a level which allows to read out the signals transmitted over the BCHs of the eNodeBs 380a, 380c. These signals are thus not only received by terrestrial mobile stations within the coverage areas of the terrestrial eNodeBs 380a, 380b, but also by the antenna array 320. From the received signals, the mobile controller 340 can acquire / derive the network information which is respectively specific for the terrestrial eNodeB 380a and the terrestrial eNodeB 380c. The mobile controller 340 can now instruct one or more of the baseband controller units 360a to 360d to broadcast the network information to the onboard mobile stations.

According to one possible realization, the mobile controller 340 instructs a first baseband controller unit 360a to broadcast the first network information of the first terrestrial eNodeB 380a and instructs a third baseband controller unit 360c to broadcast the third network information of the third terrestrial eNodeB 380c. The first baseband controller unit 360a may transmit the (first) network information to all onboard mobile stations or only to a first subset of onboard mobile stations, e.g. all mobile stations within a specific (first) sector of the aircraft. Likewise, the third baseband controller unit 360c may transmit the (third) network information to all onboard mobile stations or only to a third subset of onboard mobile stations, e.g. all mobile stations within a specific (third) sector of the aircraft. The foregoing operation is merely exemplary.

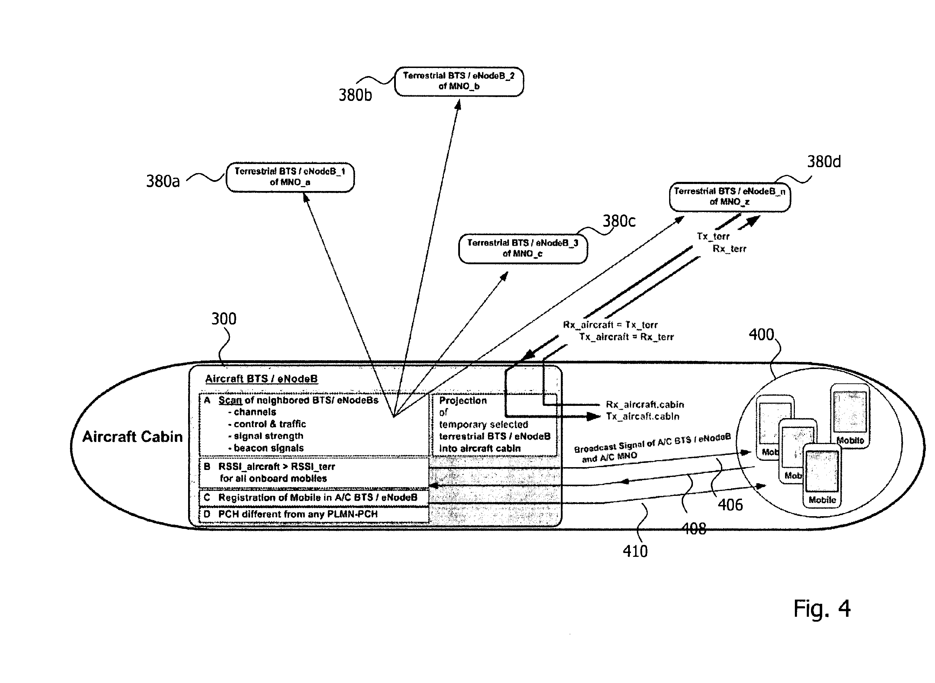

Further details of the onboard base station unit 300 according to the second embodiment will be described with respect to figure 4.

As can be seen from figure 4, the onboard base station unit 300 is connected to multiple terrestrial BTSs or eNodeBs 380a to 380d by means of multiple antenna beams generated by the antenna array 320. In the following it is assumed without limitation that the terrestrial base station 380c is a terrestrial BTS and that the terrestrial base station 380d is a terrestrial eNodeB.

As further exemplarily shown in figure 4, the antenna array 320 provides four antenna beams having such a narrow beamwidth and thus such a high antenna gain that the onboard base station unit 300 can read the signals provided by the terrestrial base stations 380a to 380d on their respective BCHs. Regarding the eNodeB 380d, the onboard base station unit 300 receives the signal transmitted on the BCH on its receiving frequency band Rx_aircraft. The receiving frequency band Rx_aircraft corresponds to the transmission frequency band Tx_terr of the terrestrial eNodeB 380d. By using a high antenna gain, the onboard base station unit 300 reads out the network information broadcasted on the BCH. The network information contains parameters which are specific for the terrestrial eNodeB 380d like channel parameters (e.g. indicating which channels are occupied in the terrestrial network), control and traffic information (e.g. indicating which amount of traffic is present on which channels), beacon signals identifying itself and providing key information necessary for devices to connect to it and the like. In addition, the onboard base station unit 300 determines the strength of the signal containing the network information.

In a similar manner, the onboard base station unit acquires the relevant network information from the terrestrial BTS 380c.

The onboard base station unit 300 then forwards the network information of the terrestrial eNodeB 380d to onboard mobile stations which are schematically illustrated as a group of onboard mobile stations 400 (step 406). Subsequently or concurrently, the onboard base station unit 300 can also forward the network information received from one or more of the other terrestrial base stations 380a to 380c, e.g. the terrestrial BTS 380c.

From the measured strength of the signal containing the network information, the onboard base station unit 300 estimates the strength of the same signal at the onboard mobile stations 400. In other words, the onboard base station unit 300 estimates an indicator indicating which signal strength said signal presumably has at each of the onboard mobile stations 400. For implementing the foregoing, the indicator may be an Received Signal Strength Indicator (RSSI) in the sense of GSM and UMTS terminology or may be a Reference Signal Received Power (RSRP) in the sense of LTE terminology. The RSRP may be regarded as the measured receive level value for a particular cell. In LTE, the RSRP is a measured value which is the linear average over the power of resource elements that carry cell specific reference signals over a considered measurement bandwidth. Consequently, the RSRP depends on the configured signal bandwidth. In the case of receiver diversity configured for the mobile stations, the reported value will be equivalent to the linear average of the power values of all diversity branches.

Although the RSSI is shown in figure 4, the RSRP will mainly be used in the following to describe further details of the present embodiment. However, the embodiment is not limited thereto and can similarly be implemented by using the RSSI or any other similar indicator, which has already been or will in the future be conceived. The RSRP (or RSSI in GSM / UMTS terminology) is an indicator which is used by the (onboard) mobile stations to decide to which base station the (onboard) mobile stations should connect to. Normally, the onboard mobile stations 400 connect to the base station from which the signal with the highest RSRP (or RSSI) is received. In order to ensure that the onboard mobile stations 400 will always connect to the onboard base station unit 400 rather than to any of the terrestrial base stations 300a to 300d, the onboard base station unit 300 (more precisely, the mobile controller 340) calculates an onboard RSRP (or RSSI) for the mobiles which are located within the aircraft cabin receiving signals from the onboard base station unit 300 and adjusts the broadcast transmit power of its broadcast channel such that the RSRP (or RSSI) received from the onboard base station unit 300 is always higher than the RSRP (RSSI) received from any terrestrial base station. For example, it applies a margin in addition. The onboard base station unit 300 then signals the onboard RSRP (or RSSI) to the onboard mobile stations 400, e.g. together with the network information in step 406. In other words, the onboard base station unit 300 (e.g., the onboard eNodeB) ensures that the received RSRP (RSSI) at all mobile stations in the cabin is higher than the received RSRP (or RSSI) signal from any of the terrestrial base stations. For this purpose, the external communication unit 320 can be adapted to determine the best case path gain to the ground since none of the onboard mobile stations 400 would have the same antenna gain as the onboard communication unit 320 (the onboard relay station). The onboard base station unit 300 (e.g., the onboard eNodeB) can also determine the path gain to any of the onboard mobile stations 400. The onboard base station unit 300 (e.g., the onboard eNodeB) can in this way adjust the broadcast transmit power such that the RSRP (or RSSI) received from the onboard base station unit 300 (e.g., the onboard eNodeB) is always higher than the RSRP (or RSSI) received from any terrestrial base station, e.g. by applying a margin in addition. Also the onboard base station unit 300 (e.g., the onboard eNodeB) can ensure that the RSRP (or RSSI) from it, received at the ground, is sufficiently low in order to avoid that any of the terrestrial mobile stations would attempt to link to the onboard base station unit 300.

In the present exemplary embodiment, the onboard base station unit 300 including the external communication unit 320 and the mobile controller 340 behaves like a mobile station (it is the relay). Hence, it is able to determine the RSRP from the terrestrial base station(s). From the RSRP, the path loss to the ground station(s) can be determined. The path loss may be regarded as a statistical value and, therefore, adding a margin to the instantaneous measurement enables the system to operate a sufficiently high percentile. The aircraft cabin environment can be regarded as a static environment and the path loss at all points of interest in the cabin can be determined / learned or even programmed in. The onboard base station unit 300 therefore knows the best case and the worst case path loss. It is, therefore, possible for the onboard base station unit 300 to adjust the transmit power of the broadcast channel to ensure that the RSRP from the onboard eNodeB is always higher.

For this purpose, the onboard base station unit 300 may implement the following algorithm, which is, however, only exemplary. The onboard base station unit 300 receives a signal from a terrestrial base station and determines the corresponding RF level of the signal. Then, the onboard base station unit 300 knows the maximal path loss in the cabin, i.e. the path loss from the onboard base station unit 300 to the onboard mobile stations 400, because it has knowledge about the maximal possible distances in the cabin. By considering the signal level and the maximal inter cabin path loss, the onboard base station unit 300 estimates the signal levels at the onboard mobile stations 400. The onboard base station unit 300 additionally considers the path loss of the link between the external communication unit 320 and the terrestrial base station(s), e.g. the terrestrial BTS or eNodeB, the minimal path loss in the cabin, e.g. the path loss to a window, and thus knows the RSRP (or RSSI) the onboard mobile stations would receive from the terrestrial base stations and the onboard base station unit 300 (when broadcasting on its current transmit power). The onboard base station unit 300 can then, if necessary, adjust its transmit power, e.g. by applying a margin in addition, such that the onboard mobile stations 400 obtain a higher RSRP (RSSI) from the broadcast channel of the onboard base station unit 300 than from the broadcast channels of the terrestrial base stations.

The mobile stations receiving the network information, the onboard RSRP (or RSSI) and one or more terrestrial RSRPs (or RSSIs) now have all information necessary to decide to which base station they should attach by means of which connection procedure. The mobile stations 400 derive from the onboard RSRP (or RSSI) and the terrestrial RSRPs (or RSSIs) that the onboard base station unit 300 provides the best transmission path and thus they select the onboard base station unit 300. By considering the network information, the mobile stations 400 connect to the onboard base station unit 300 and register with the onboard base station unit 300 to finalise the connection procedure (step 408). The onboard base station unit 300 then connects to the terrestrial eNodeB 380d by using the same connection procedure so that a connection is established between the terrestrial eNodeB 380d and at least some of the mobile stations 400. In this way, wireless services can be exchanged between the terrestrial LTE network covered by the terrestrial eNodeB 380d and the onboard mobile stations 400. In parallel, the onboard base station unit 300 can provide a similar connection to the terrestrial BTS 300c. For example, the onboard mobile stations 400 may support LTE services and thus are able to process the LTE specific network information from the terrestrial eNodeB 380d. Other mobile stations, however, may not be able to process this LTE specific network information, because they only support GSM. Thus, these onboard mobile stations will be able to connect to the onboard base station unit 300 by using the GSM specific network information received from the terrestrial BTS 380c and the onboard base station unit 300 will correspondingly connect to the terrestrial BTS 380c by means of the same connection procedure.

This procedure is possible because the onboard base station unit 300 exemplarily shown in figure 3 supports several mobile standards, for example LTE and GSM. After having established the connections, the onboard mobile terminals 400 can be paged from terrestrial networks, i.e. they can receive calls, messages or the like (step 410). If, for example, one of the mobile stations is "paged" using the Paging CHannel (PCH), this will be recognised by the onboard base station unit 300, as it will monitor the PCHs (in the same way any regular mobile station would do). The onboard base station unit 300 will then forward the paging request to the paged mobile station(s) in the aircraft. That is, from the perspective of incoming calls, the onboard base station unit 300 can be regarded as a relaying system which is fully transparent.

The data transmission between the terrestrial networks and the onboard mobile stations 400 can be performed in various ways, wherein two of these ways are in the following exemplarily described.

In a first configuration, the onboard base station unit 300 is adapted to merely forward the data transmissions between the onboard mobile stations 400 and the terrestrial base stations 380a to 380d on the same channels. For example, the terrestrial eNodeB transmits data over the transmission channel Tx_terr which corresponds to the reception channel Rx_aircraft of the onboard base station unit 300. Thereafter, the onboard base station unit 300 forwards the data on its onboard transmission channel Tx_aircraft_cabin, which in the first configuration corresponds to the transmission channel Tx_Terr of the terrestrial eNodeB 380d. If one of the onboard mobile stations 400 transmits data, this data is received by the onboard base station unit 300 on its onboard reception channel Rx_aircraft_cabin. The onboard base station unit 300 forwards this data to the terrestrial eNodeB on its transmission channel Tx_aircraft. The terrestrial eNodeB 380d receives the data on its reception channel Rx_terr which corresponds to the transmission channel Tx_aircraft of the onboard base station unit 300. In order to establish data communication between the onboard mobile stations 400 and more than one terrestrial base station, e.g. the terrestrial eNodeB 380d and the terrestrial BTS 380c, the base station unit provides multiple communication paths, i.e. it has multiple external antennas and multiple onboard antennas. Thus, the onboard base station 300 is adapted to provide a path for data transmission between the terrestrial eNodeB 380d and the onboard mobile stations 400 and a parallel communication path for data transmission between the terrestrial BTS 380c and the onboard mobile stations 400. On these communication paths different frequency bands may be used, as GSM data signals may be transmitted and received on different frequencies than LTE data signals.

In a second configuration, there is no need to provide multiple communication paths on board of the aircraft. The whole data received by the onboard base station unit 300 on multiple links to the ground (e.g., between the onboard base station unit 300 and the terrestrial BTS 380c and between the onboard base station unit 300 and the terrestrial eNodeB 380d) are transmitted by the onboard base station unit 300 on one single data channel. In the same way as described above, the onboard base station unit 300, for example, receives data transmitted by the terrestrial eNodeB 380d on the transmission channel Tx_terr. The transmission channel Tx_terr corresponds to the reception channel Rx_aircraft of the onboard base station unit 300. Instead of simply forwarding the data on the its onboard transmission channel Tx_aircraft_cabin corresponding to the transmission channel Tx_terr of the terrestrial eNodeB 380d, the onboard base station unit 300 multiplexes the data received from the, e.g. all, terrestrial base stations 380a to 380d it is connected to on one single multiplex channel, which can be randomly chosen or can be predetermined. The data is then transmitted to the onboard mobile stations 400 on the multiplex channel. The frequency band of the multiplex channel may be any predetermined frequency band which could also be changed by the controller 340. Thus, the onboard base station 300 is adapted to provide data transmission between all terrestrial base stations 380a to 380d it is connected to and the mobile stations 400 by using one single onboard data channel, namely the multiplex channel. Instead of using only one single multiplex channel, the onboard base station unit 300 may support two or more multiplex channels.

To summarize, as described above, the same cell information as found on the ground is replicated inside the aircraft cabin. As a result, from the viewpoint of a mobile device inside the aircraft cabin, it "thinks" it is on the ground as it finds exactly the same network information inside the aircraft cabin. It will read the BCH and will then connect to its home network in the aircraft cabin. The system in the aircraft cabin recognises that a particular mobile device is connected to the network in the aircraft cabin, and it will then perform the same connection procedure to the network on the ground as the mobile has performed inside the aircraft cabin using the same antenna beamforming array that was used for reading out the BCH of the terrestrial base stations. From the viewpoint of the terrestrial network, the mobile device is then connected to the respective base station on the ground which means home and visitor location registers on the ground are updated, i.e., the terrestrial system "thinks" the mobile is physically connected to the base station on the ground.

If this particular mobile device is "paged" using the PCH, this will be recognised by the onboard system, as it will monitor the paging channels (in the same way any regular mobile station would do), and it will then forward the paging request to the mobile in the aircraft (from the perspective of incoming calls the relaying system is fully transparent).

The connection is then established using dedicated data channels which may be the same in the mirrored onboard system as well as in the system on the ground. In an alternative, the dedicated data channels on the ground are not simply copied (mirrored) in the aircraft cabin. Instead, the dedicated data channels are multiplexed on one or several multiplex channels. If the dedicated channels are mirrored (copied), the onboard cellular system together with the beamforming antenna array acts as a transparent "tunnel" for the communication links using the beamforming array as a relay, e.g. the onboard cellular system together with the beamforming array may act as a transparent feed-forward relay.

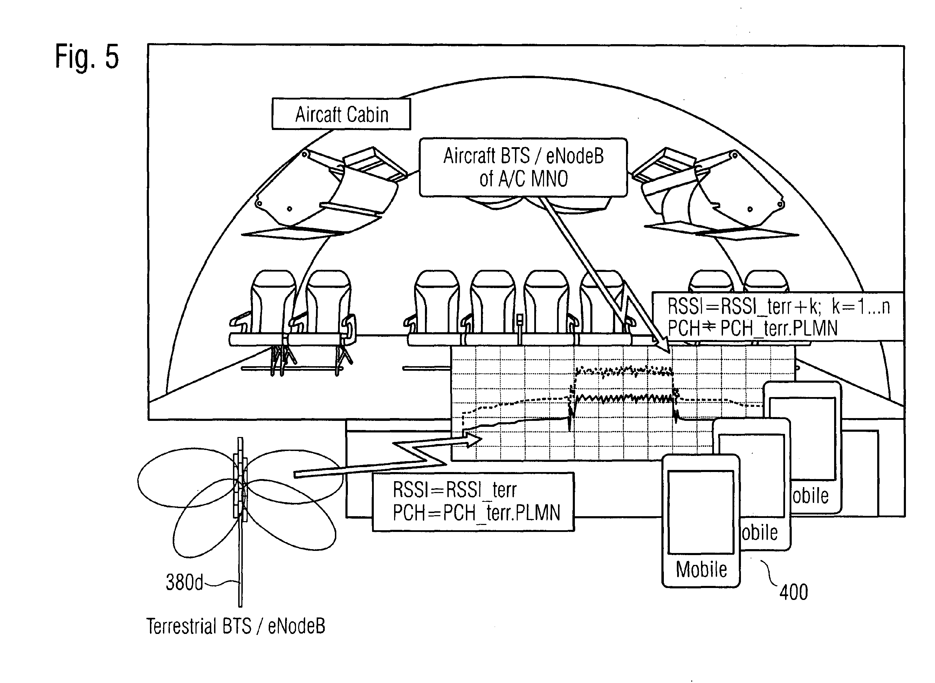

Figure 5 illustrates that the received and mirrored signal strength indicator (RSSI), or analogue signal in other cellular systems, is usually received with higher power from the onboard base station 300 inside the aircraft. Although figure 5 exemplarily shows RSSIs, the details shown in figure 5 and described herein can be equally applied to RSRPs or any other indicators. The onboard base station unit 300 evaluates the terrestrial RSSIs. The onboard onboard base station unit 300 (e.g. the onboard eNodeB) can now adjust the broadcast transmit power such that the RSSI received by the onboard mobile stations from the onboard base station unit 300 (e.g., the onboard eNodeB) is always higher than the RSSI received by the onboard mobile stations from any terrestrial base station. This entirely avoids the situation that the mobile stations attempt to connect to the ground. This is schematically illustrated in figure 5 in which the upper signal in the diagram is the RSSI of the onboard base station unit 300 and the lower signal is the RSSI of one of the terrestrial base stations.

If the aircraft passes an area where no network exists with which a service provider of a user on the aircraft has roaming agreements, the mobile stations 400 on the plane would remain in network selection mode. Exactly the same would happen if the mobile stations 400 were on the ground (all networks are mirrored). This does not pose any problems for the aircraft because network search is a passive operation which does not produce high power signals.

The described principle can be used during ascent, cruise and descent phase but in the same way when the aircraft is on ground.

The onboard base station unit and the corresponding method described herein provide multiple advantages. Since no suppressor or Jammer is needed anymore, the weight and energy consumption of the means of transport can be reduced. Further, no additional onboard operator is required and passengers do not have to sign up with a local temporary (aircraft) operator, but with their home operator. Effective aircraft-to-ground communication is established, whereby onboard mobile stations can transmit with minimum power. Further, not other communication systems are required to provide the aircraft-to-ground connection, e.g. for Internet access, mobile calls, content loading or streaming and the like. No satellite links have to be leased which reduces the costs. Further, by the direct aircraft-to-ground link more data can be transferred for more subscribers at the same time connected with essentially decreased costs per MByte. Further, cellular communication is enabled on board of an aircraft regardless of the distance from ground, as basically use of mobile devices can be permitted any time. Energy drain of mobile devices on board is minimal (as they can transmit with minimal power because of the absence of the suppressor) which results in prolonged talk and standby times while being connected. Even further, the onboard base station unit can be designed to cause not interference with onboard electronic systems.

It is believed that many advantages of the present invention will be fully understood from the forgoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

## Claims

1. An onboard base station unit (100, 300) for providing wireless communication services on board of a means of transport, in particular an aircraft, wherein the onboard base station unit (100, 300) comprises:
- an onboard control unit (140, 340) for acquiring network information from an information signal provided by one or more terrestrial base stations (380a to 380d), in particular an information signal transmitted over a respective broadcast channel of the one or more terrestrial base stations (380a to 380d), to one or more terrestrial mobile stations, wherein the network information enables the one or more terrestrial mobile stations to connect to the one or more terrestrial base stations (380a to 380d); and
- an onboard communication unit (160, 360a to 360d) for transmitting the acquired network information to one or more onboard mobile stations (400) located on the means of transport for enabling the one or more onboard mobile stations (400) to connect to the onboard base station unit (100, 300) by means of the network information.

2. The onboard base station unit (100, 300) of claim 1, wherein the onboard base station unit (100, 300) further comprises an external communication unit (120, 320) for camping on the one or more terrestrial base stations (380a to 380d) to receive the information signal containing the network information, wherein the external communication unit (120, 320) in particular comprises an antenna array (110a to 110c) for generating one or more adaptive antenna beams respectively having a dynamically changeable beam pattern for camping on the one or more terrestrial base stations (380a to 380d).

3. The onboard base station unit (100, 300) of claim 2, wherein the external communication unit (120, 320) is further adapted to detect the one or more terrestrial base stations (380a to 380d) by using a first antenna beamwidth and to camp on at least one of the one or more detected terrestrial base stations (380a to 380d) for receiving the information signal by using a second antenna beamwidth, wherein the second antenna beamwidth is smaller than the first antenna beamwidth.

4. The onboard base station unit (100, 300) of claim 2 or 3, wherein the onboard control unit (140, 340) is further adapted to derive, from the strength of the information signal received by the external communication unit (120, 320) from the one or more terrestrial base stations (380a to 380d), one or more terrestrial received signal strength indicators, each of the one or more terrestrial received signal strength indicators indicating the strength of the information signal at the one or more onboard mobile stations (400), wherein the onboard control unit (140, 340) is further adapted to adjust the transmit power of the onboard communication unit (160, 360a to 360d) such that an onboard received signal strength indicator received by the onboard mobile stations (400) from the onboard base station unit (300) is higher than the one or more terrestrial received signal strength indicators.

5. The onboard base station unit (100, 300) of any one of claims 2 to 4, wherein the onboard control unit (140, 340) is further adapted to determine whether at least one of the one or more onboard mobile stations (400) is connected to the onboard base station unit (100, 300) and to instruct the external communication unit (120, 320) to connect to at least one of the one or more terrestrial base stations (380a to 380d), if at least one of the one or more onboard mobile stations (400) is connected to the onboard base station unit (100, 300, wherein the onboard control unit (120, 320) is in particular adapted to instruct the external communication unit (120, 320) to connect to the one or more terrestrial base stations (380a, 380d) using a connection procedure which corresponds to the connection procedure used by the one or more onboard mobile stations (400) to connect to the onboard base station unit (100, 300).

6. The onboard base station unit (100, 300) of claims 2 to 5, wherein the external communication unit (120, 320) is further adapted to communicate with the one or more terrestrial base stations (380a to 380d) by using one or more dedicated terrestrial data channels and the onboard communication unit (120, 320) is adapted to
communicate with the one or more onboard mobile stations (400) using dedicated onboard data channels corresponding to the dedicated terrestrial data channels or
multiplex the dedicated terrestrial data channels on one or more multiplex channels and communicate with the one or more onboard mobile stations (400) using the one or more multiplex channels.

7. The onboard base station unit (100, 300) of any one of claims 1 to 6, wherein the onboard base station unit (100, 300) is further adapted to act as a transparent feed-forward relay and/or to operate as an autonomous femtocell.

8. The onboard base station unit (100, 300) of claims 1 to 7, wherein the onboard base station unit (100, 300) is adapted to support at least one of the Global System for Mobile Communication, "GSM", Universal Mobile Telecommunication System, "UMTS", Long Term Evolution, "LTE", LTE-advanced, "LTE-a", Code Division Multiple Access 2000, "CDMA2000", and Worldwide Interoperability for Microwave Access "WiMax" Standard.

9. A method for providing wireless communication services on board of a means of transport, in particular an aircraft, wherein the method comprises the steps of:
- acquiring (204), by an onboard base station unit (100, 300) located on the means of transport, network information from an information signal provided by one or more terrestrial base stations (380a to 380d), in particular an information signal transmitted over a respective broadcast channel of the one or more terrestrial base stations (380a to 380d), to one or more terrestrial mobile stations, wherein the network information enables the one or more terrestrial mobile stations to connect to the one or more terrestrial base stations (380a to 380d); and
- transmitting (206, 406), by the onboard base station unit (100, 300), the acquired network information to one or more onboard mobile stations (400) located on the means of transport for enabling the one or more onboard mobile stations (400) to connect to the onboard base station unit (100, 300) by means of the network information.

10. The method of claim 9, wherein the method further comprises the step of camping, by the onboard base station unit (100, 300), on the one or more terrestrial base stations (380a to 380d) to receive the information signal containing the network information, wherein the method in particular comprises the step of generating, by the onboard base station unit (100, 300), one or more adaptive antenna beams respectively having a dynamically changeable beam pattern for camping on the one or more terrestrial base stations (380a to 380d), and/or
wherein the method further comprises the steps of detecting, by the onboard base station unit (100, 300), terrestrial base stations (380a to 380d) by using a first antenna beamwidth and camping, by the onboard base station unit (100, 300), on one or more of the detected terrestrial base stations (380a to 380d) for receiving the information signal by using a second antenna beamwidth, wherein the second antenna beamwidth is smaller than the first antenna beamwidth.

11. The method of claim 9 or 10, wherein the method further comprises the step of deriving, by the onboard base station unit (100, 300), from the strength of the information signal received by the onboard base station unit (100, 300) from the one or more terrestrial base stations (380a to 380d), one or more terrestrial received signal strength indicators, each of the one or more terrestrial received signal strength indicators indicating the strength of the information signal at the one or more onboard mobile stations (400), wherein the method further comprises the step of adjusting, by the onboard base station unit (100, 300), its transmit power such that an onboard received signal strength indicator received by the onboard mobile stations (400) from the onboard base station unit (300) is higher than the one or more terrestrial received signal strength indicators.

12. The method of any one of claims 9 to 11, wherein the method further comprises the steps of determining, by the onboard base station unit (100, 300), whether at least one of the one or more onboard mobile stations (400) is connected to the onboard base station unit (100, 300) and connecting, by the onboard base station unit (100, 300), to at least one of the one or more terrestrial base stations (380a to 380d), if at least one of the one or more onboard mobile stations (400) is connected to the onboard base station unit (100, 300), and/or wherein the method further comprises the step of connecting, by the onboard base station unit (100, 300), to the one or more terrestrial base stations (380a to 380d) using a connection procedure which corresponds to the connection procedure used by the one or more onboard mobile stations (400) to connect to the onboard base station unit (100, 300).

13. The method of any one of claims 9 to 12, wherein the method further comprises the step of communicating, by the onboard base station unit (100, 300), with the one or more terrestrial base stations (380a to 380d) using one or more dedicated terrestrial data channels and the method further comprises the steps of
communicating, by the onboard base station unit (100, 300), with the one or more onboard mobile stations (400) using dedicated onboard data channels corresponding to the dedicated terrestrial data channels or
multiplexing, by the onboard base station unit (100, 300), the dedicated terrestrial data channels on one or more multiplex channels and communicating, by the onboard base station unit (100, 300), with the one or more onboard mobile stations (400) using the one or more multiplex channels.

14. A computer program product comprising program code portions for performing the steps of one of claims 9 to 13 when the computer program product is run or executed on a computer system.

15. The computer program product of claim 14, stored on a computer-readable recording medium.
